# EUROPÄISCHE PATENTSCHRIFT

(11) **EP 3 072 379 B1**
(45) Veröffentlichungstag und Bekanntmachung des Hinweises auf die Patenterteilung: **01.01.2020**
(21) Anmeldenummer: 16156889.4
(22) Anmeldetag: 23.02.2016
(51) Int. Cl.: A01D 41/14, E02F 9/22

(54) **DÄMPFUNG VON NICKSCHWINGUNGEN EINES ARBEITSFAHRZEUGS DURCH GESCHWINDIGKEITSÄNDERUNG**
ATTENUATION OF THE PITCHING OSCILLATION OF A WORK VEHICLE CAUSED BY SPEED CHANGE
AMORTISSEMENT DU TANGAGE D'UN VEHICULE DE TRAVAIL PAR MODIFICATION DE LA VITESSE

(30) Priorität: 26.03.2015 DE 102015205509
(43) Veröffentlichungstag der Anmeldung: 28.09.2016
(73) Patentinhaber: Deere & Company, Moline, IL 61265 (US)
(72) Erfinder: Jung, Benedikt, 67655 Kaiserslautern (DE); Münch, Philipp, 67663 Kaiserslautern (DE); Wolf, Günther, 67549 Worms (DE)
(74) Vertreter: Holst, Sönke

(56) Entgegenhaltungen:
- EP-A1- 1 388 279
- EP-A1- 2 679 086
- DE-A1- 3 446 811
- US-A1- 2013 292 144
- LODIGE H ET AL: "AKTIVE SCHWINGUNGSDAMPFUNG FUR UNGEFEDERTE ARBEITSMASCHINEN", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, Bd. 39, Nr. 3, 1. März 1995 (1995-03-01), Seiten 188-192, XP000492760, ISSN: 0341-2660

## Beschreibung

Die Erfindung betrifft ein Arbeitsfahrzeug, das durch federnde Elemente auf dem Boden abgestützt ist und mit einer Anordnung zur Dämpfung einer eventuellen Nickschwingung des Arbeitsfahrzeugs ausgestattet ist.

### Technologischer Hintergrund

Landwirtschaftliche oder andere Arbeitsfahrzeuge umfassen in der Regel Elemente, die durch zugeordnete Aktoren gegenüber dem Arbeitsfahrzeug verstellbar, d.h. linear verschiebbar oder verschwenkbar sind. Hierzu zählen im Falle eines Traktors ein an einem Front- oder Heckkraftheber eines Traktors angebrachtes Arbeitsgerät beispielsweise zur Bodenbearbeitung, zum Säen oder zum Ausbringen von Dünger oder anderen Chemikalien, bei einer selbstfahrenden Feldspritze ein höhenverstellbares und/oder um eine sich in Vorwärtsrichtung erstreckenden Achse schwenkbares Spritzgestänge, bei einem Mähdrescher oder Feldhäcksler ein Erntevorsatz, der zur Höhenverstellung um eine horizontale, quer zur Vorwärtsrichtung orientierte Achse (in der Regel die Drehachse einer oberen Schrägfördererwalze bzw. Häckseltrommel) und/oder zur parallelen Ausrichtung an einem Seitenhang um eine sich in Vorwärtsrichtung erstreckende Achse schwenkbar ist, oder ein zur Höhenverstellung seines Auslassendes um eine horizontale Achse höhenverstellbarer und/oder um die Hochachse höhenverstellbarer Auswurfkrümmer eines Feldhäckslers. Die Sollposition des Aktors und somit des verstellbaren Elements wird durch einen Bediener über eine geeignete Schnittstelle oder durch eine mit Sensoren zusammenwirkende, automatische Steuereinrichtung vorgegeben.

Da sich das Arbeitsfahrzeug in der Regel durch luftgefüllte (und somit federnd nachgiebige) Reifen auf dem Erdboden abstützt und/oder mit einer Federung zwischen den Rädern oder Raupenlaufwerken und dem Körper der Arbeitsfahrzeug versehen sein kann, wird das System aus dem verstellbaren Element und dem Arbeitsfahrzeug bei jeder Verstellung des Aktors zu einer Nickschwingung (Stampfen, engl.: pitch) angeregt, die sich im Betrieb als störend auswirken kann. So können Schneidwerke eine Breite von 12 m oder mehr aufweisen und, wenn sie in Höhen von wenigen cm über dem Boden geführt werden, kann mitunter aufgrund der bei einer Höhenverstellung entstehenden Schwingung eine gewünschte Schnitthöhe nicht aufrecht erhalten werden. Außerdem wird das Arbeitsfahrzeug aufgrund der nachgiebigen Reifen und/oder der Federung zu Nickschwingungen angeregt, wenn das Arbeitsfahrzeug selbsttätig oder auf eine Bedienereingabe hin seine Fahrgeschwindigkeit ändert oder über Bodenwellen fährt. Es sind auch Rollschwingungen in seitlicher Richtung möglich, wenn beispielsweise Räder auf nur einer Seite über Bodenwellen fahren.

Zur Bedämpfung von derartigen Nickschwingungen an einem Traktor mit einem angelenkten Pflug wurde vorgeschlagen, bei einer Straßenfahrt den dann angehobenen Pflug aktiv zu bedämpfen, indem durch Nickschwingungen bedingte Kraftänderungen durch Sensoren für die Belastung der Vorderachse, der Zugkraft oder des Drucks in einem Hydraulikzylinder erfasst und zur Ansteuerung des zur Höhenverstellung des Pfluges dienenden Hydraulikzylinders verwendet werden (DE 34 46 811 A1). Die Nickschwingung des aus Pflug und Traktor bestehenden Systems wird demnach durch eine geeignete Höhenverstellung des Pfluges gedämpft, die der Schwingung entgegenwirkt. In ähnlicher Weise wird in der DE 10 2010 017 459 A1 vorgeschlagen, eventuelle Schwingungen eines Auswurfkrümmers eines Feldhäckslers durch einen Sensor zur Erfassung der Position des Auswurfkrümmers gegenüber dem Feldhäcksler oder des Drucks in dem zur Höhenverstellung des Auswurfkrümmers dienenden Hydraulikzylinder zu erfassen, um eventuelle Nickschwingungen des Feldhäckslers zu erkennen und den Hydraulikzylinder ggf. entgegengesetzt zur Schwingung ansteuern.

Im Stand der Technik sind weiterhin Regelschaltungen bekannt, die mit einem Sensor zur Erfassung der jeweiligen Position des verstellbaren Elements ausgerüstet sind, deren Signal zur Zurückführung der Ist-Position des Elements an eine Regelschaltung dient (vgl. beispielsweise US 2009/0277145 A1 für eine Höhenverstellung eines Erntevorsatzes eines Mähdreschers). Dadurch werden eventuelle, u.a. auch durch die Nickschwingung des Arbeitsfahrzeugs bedingte Abweichungen des Elements von seiner Sollposition zwar erfasst und der Regelschaltung zurückgeführt, um den Erntevorsatz in seiner gewünschten Höhe über dem Boden zu halten, jedoch findet bei eventuellen Nickschwingungen des Systems aus Erntemaschine und Erntevorsatz keine systematische Dämpfung dieser Nickschwingung statt.

Die US 2013/0292144 A1 beschreibt ein System zum Verhindern des Hüpfens eines Fahrzeugs. Mittels eines Sensors, der unterschiedliche Freiheitsgrade erfassen kann, u.a. den Nickwinkel des Fahrzeugs, wird die vertikale Beschleunigung des Fahrzeugs erfasst. Sollte diese darauf hindeuten, dass das Fahrzeug z.B. auf unebenem Grund eine Hüpfbewegung durchführt, wird das Fahrzeug schneller oder langsamer bewegt, bis die Hüpfbewegung endet.

Im Stand der Technik ist es demnach insbesondere aus DE 34 46 811 A1 bekannt, eventuelle Nickschwingungen eines aus einem Arbeitsfahrzeug und einem demgegenüber in der Höhe verstellbaren Element bestehenden Systems durch eine geeignete Höhenverstellung des verstellbaren Elements zu bedämpfen. Eine derartige Vorgehensweise stößt jedoch an Grenzen, wenn die Position des Elements beim Arbeitsvorgang innerhalb eines definierten Bereiches bleiben soll, z.B. falls es sich bei dem höhenverstellbaren Element um einen Erntevorsatz handelt, der weder in den Boden eindringen noch oberhalb der Ähren schneiden soll, oder eine bestimmte Pflugtiefe eingehalten werden soll. Die Anordnung nach US 2013/0292144 A1 kann das erwähnte Problem nicht lösen, da lediglich bei Hüpfbewegungen eine Geschwindigkeitsänderung erfolgt.

### Aufgabe

Die vorliegende Erfindung hat sich zur Aufgabe gesetzt, eine Anordnung zur Dämpfung einer eventuellen Nickschwingung eines Arbeitsfahrzeugs bereitzustellen, bei welcher die erwähnten Nachteile vermieden oder vermindert werden.

### Erfindung

Die vorliegende Erfindung wird durch die Patentansprüche definiert.

Eine Anordnung zur Dämpfung einer eventuellen Nickschwingung eines durch federnde Elemente auf dem Boden abgestützten Arbeitsfahrzeugs umfasst Mittel zur Erkennung einer zu erwartenden und/oder einer vorhandenen Nickschwingung des Arbeitsfahrzeugs und eine Steuereinrichtung, die mit den Mitteln und einem zur Beeinflussung der Vortriebsgeschwindigkeit des Arbeitsfahrzeugs eingerichteten Aktor verbunden und betreibbar ist, den Aktor im Sinne einer Dämpfung der Nickschwingung anzusteuern.

Wenn das Arbeitsfahrzeug beispielsweise beschleunigt wird, wird sich das Arbeitsfahrzeug aufgrund der Federung der federnden Elemente, bei denen es sich um luftbereifte Räder und/oder zusätzliche Federungen handeln kann, zunächst nach hinten neigen und dann wieder nach vorn schwingen, um sich dann mit zeitlich abnehmender Amplitude wieder nach hinten und dann wieder nach vorn zu neigen. Analog wird sich das Arbeitsfahrzeug beim Bremsen nach vorn neigen und anschließend nach hinten neigen. Auch können derartige Nickschwingungen beim Überfahren von Bodenunebenheiten oder bei der Höhenverstellung eines Elements des Arbeitsfahrzeugs entstehen. Diese Nickschwingungen haben u.a. nachteilige Auswirkungen auf eine möglichst konstant zu haltende Höhe eines an dem Arbeitsfahrzeug angebrachten Elements, wie eines Erntevorsatzes, und den Komfort eines auf oder in dem Arbeitsfahrzeug sitzenden Bedieners. Es wird vorgeschlagen, durch geeignete Mittel eine zu erwartende und/oder vorhandene Schwingbewegung des Arbeitsfahrzeugs zu erkennen und mittels der Steuereinrichtung einen Aktor anzusteuern, der die Vortriebsgeschwindigkeit des Arbeitsfahrzeugs kontrolliert, um die Nickschwingung zu dämpfen. Auf diese Weise wird das Arbeitsfahrzeug leicht beschleunigt, wenn es sich gerade nach vorn neigt, um schließlich eine genau horizontale Ausrichtung des Arbeitsfahrzeugs zu erzielen und die Energie der Nickschwingung zu vermindern oder zu vernichten. Analog wird das Arbeitsfahrzeug leicht abgebremst, wenn es sich nach hinten neigt. Die vorliegende Erfindung ermöglicht somit eine einfache und wirkungsvolle Bedämpfung von Nickschwingungen von Arbeitsfahrzeugen.

Wie erwähnt, umfasst die Anordnung Mittel zur Erkennung einer zu erwartenden und/oder vorhandenen Schwingbewegung des Arbeitsfahrzeugs, kann d.h. bei Erkennung einer zu erwartenden Schwingbewegung als Regelsystem mit offener Schleife ausgeführt sein bzw. bei Erkennung einer vorhandenen Schwingbewegung als Regelsystem mit geschlossener Schleife. Eine Erkennung einer vorhandenen Schwingbewegung kann durch einen Trägheitssensor und/oder einen Drucksensor erfolgen, der den Druck in einem zur Verstellung eines beweglich am Arbeitsfahrzeug angebrachten Elements dienenden, fluidischen Aktor erfasst. Es wird somit erfasst, wenn das Arbeitsfahrzeug (gegenüber dem Erdboden) eine Nickschwingung durchführt und diese zumindest zum Teil durch eine Geschwindigkeitsänderung des Arbeitsfahrzeugs gedämpft.

Eine Erkennung einer zu erwartenden Nickschwingung des Arbeitsfahrzeugs erfolgt hingegen anhand von Signalen einer Geschwindigkeitssteuerung des Arbeitsfahrzeugs, denn die Beschleunigung und Verzögerung des Arbeitsfahrzeugs hat die im vorhergehenden Absatz beschriebene Nickschwingung zur Folge. Die Erkennung einer zu erwartenden Nickschwingung kann auch anhand einer Bodenprofilbestimmungseinrichtung erfolgen oder anhand einer Kontrolleinrichtung zur Verstellung eines Elements gegenüber dem Arbeitsfahrzeug, die ebenfalls eine Nickschwingung bewirken kann. Es wird somit die Amplitude und Phase einer zu erwartenden Nickschwingung evaluiert und der Aktor entsprechend (vorausschauend in einem System mit offener oder geschlossener Regelschleife) angesteuert, um die Nickschwingung zu bekämpfen.

Hier kann insbesondere auf die in DE 10 2014 203 005 B3 und dem dort zitierten Stand der Technik beschriebene Vorgehensweise zurückgegriffen werden. Bei einer derartigen Ausführungsform erhält ein Signalformer ein Geschwindigkeitsvorgabesignal von einem Bediener oder einer Automatik. Wenn dieses eine sprunghafte Änderung der Sollgeschwindigkeit vorgibt, leitet der Signalformer diese zunächst 1:1 an den die Vortriebsgeschwindigkeit des Arbeitsfahrzeugs dienenden Aktor (z.B. hydrostatisches Getriebe) weiter. Nach einer gewissen Zeit, welche die Arbeitsmaschine für eine halbe Nickschwingungsperiode benötigt, gibt der Signalformer dann eine zweite Anweisung an den Aktor, der einer weiteren Geschwindigkeitsänderung entspricht. Wenn die Arbeitsmaschine demnach sprunghaft beschleunigt, erfolgt nach der ersten Beschleunigung eine zweite Beschleunigung, wenn sich die Maschine gerade wieder nach vorn neigt.

Die Steuereinrichtung kann zusätzlich mit einem zweiten Aktor zur Verstellung eines Elements gegenüber dem Arbeitsfahrzeug verbunden und betreibbar sein, den zweiten Aktor im Sinne einer Einhaltung einer Sollposition des Elements und/oder einer Dämpfung der Nickschwingung anzusteuern. Die Steuereinrichtung kann den zur Beeinflussung der Vortriebsgeschwindigkeit dienenden, ersten Aktor und den zweiten Aktor in getrennten Regelkreisen oder in einem Mehrgrößenregler ansteuern.

### Ausführungsbeispiel

In den Zeichnungen sind zwei nachfolgend näher beschriebene Ausführungsbeispiele der Erfindung dargestellt, wobei die Bezugszeichen nicht zu einer einschränkenden Auslegung der Patentansprüche herangezogen werden dürfen. Es zeigt:
- Fig. 1: eine schematische seitliche Ansicht eines Arbeitsfahrzeugs mit einem verstellbaren Element,
- Fig. 2: eine schematische Darstellung einer ersten Ausführungsform einer Anordnung zur nickschwingungsdämpfenden Kontrolle der Vortriebsgeschwindigkeit und der Höhe des Erntevorsatzes des Arbeitsfahrzeugs aus Figur 1, und
- Fig. 3: eine schematische Darstellung einer zweiten Ausführungsform einer Anordnung zur nickschwingungsdämpfenden Kontrolle der Vortriebsgeschwindigkeit und der Höhe des Erntevorsatzes des Arbeitsfahrzeugs aus Figur 1.

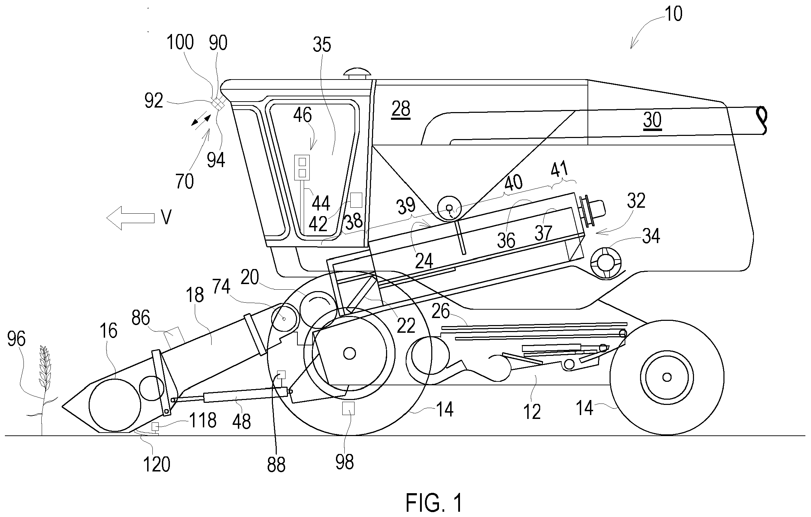

Die Figur 1 zeigt ein selbstfahrendes landwirtschaftliches Arbeitsfahrzeug 10 in Form eines Mähdreschers mit einer tragenden Struktur 12, die mit im Eingriff mit dem Erdboden stehenden Rädern 14 versehen ist. Obwohl das Arbeitsfahrzeug 10 mit Rädern dargestellt ist, könnte sie auch mit zwei oder vier Raupenlaufwerken versehen sein. Ein Erntevorsatz 16 in Form eines Schneidwerks wird zum Ernten von Erntegut verwendet und führt es einem Schrägförderer 18 zu. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse der Arbeitsfahrzeug 10 angeordnet sein.

Im Betrieb drischt und trennt die Gutbearbeitungseinrichtung 24 das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite der Arbeitsfahrzeug 10 aus. Es ist anzumerken, dass die Auswurftrommel 34 das vom Korn befreite Gut auch direkt einem Strohhäcksler zuführen könnte. Der Betrieb der Arbeitsfahrzeug 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird.

Die Höhensteuerung des Erntevorsatzes 16, der in der vorliegenden Ausführungsform als Beispiel für ein verstellbares Element des Arbeitsfahrzeugs 10 dient, erfolgt mittels eines Aktors 48 in Form eines Hydraulikzylinders, welcher den Schrägförderer 18 mit dem daran befestigten Erntevorsatz 16 um die quer zur Vorwärtsrichtung V und horizontal orientierte Drehachse der oberen Umlenkwalze 74 des Schrägförderers 18 verstellt und somit den Abstand zwischen dem Erntevorsatz 16 und dem Erdboden definiert. Der Aktor 48 wird mittels einer Steuereinrichtung 42 kontrolliert. Die gewünschte (Soll-) Höhe des Erntevorsatzes 16 wird mittels einer Bedienerschnittstelle 46 mit Tasten vorgegeben, die am oberen Ende eines Fahrhebels 44 angebracht sind, welcher schwenkbar angelenkt ist und zur Vorgabe der Vortriebsgeschwindigkeit des Arbeitsfahrzeugs 10 dient. Zusätzlich ist eine vorausschauende Sensorik 70 mit einem Radarsender 92, einem Radarempfänger 94 und einer Auswertungseinheit 90 am Dach der Kabine 35 montiert, wobei der Radarsender 92 und der Radarempfänger 94 um eine Achse 100 hin- und herschwenken, um die Kontur des Felds vor der Arbeitsfahrzeug 10 mit den Pflanzenbestand 96 durchdringenden Strahlen abzutasten und vorausschauende Werte für die Steuereinrichtung 42 zu gewinnen. Ein mit einem Bodenfühler 120 zusammenwirkender Höhensensor 118 erfasst zudem die tatsächliche Höhe des Erntevorsatzes 16 über dem Boden. Die Sensorik 70 und der Höhensensor 118 werden für die selbsttätige Höhenverstellung des Erntevorsatzes 16 benötigt und sind für die weiter unten beschriebene Geschwindigkeitsregelung nicht unbedingt erforderlich.

Bei der Positions- und Lageänderung des Erntevorsatzes 16 (z. B. Heben und Senken, in einer anderen Ausführungsform zusätzlich laterales Verkippen) entstehen im Stand der Technik bei Änderungen der Positionssollwerte des Erntevorsatzes 16 Erregermomente und Erregerkräfte, welche auf das auf großvolumigen Reifen stehende Arbeitsfahrzeug 10 übertragen werden, das durch federnde Elemente (nämlich die Reifen) auf dem Boden abgestützt wird. Bedingt durch die großvolumigen Reifen wird hier das System aus Arbeitsfahrzeug 10 mit Erntevorsatz 16 zu mechanischen Schwingungen angeregt, welche die Genauigkeit der Höhenlage und der Verkippung des Erntevorsatzes 16 - relativ zum Boden - negativ beeinflussen. Je nach Art der Erregerkräfte und -momente wird die Erntemaschine-Vorsatz-Einheit mit Schwingungen unterschiedlicher Frequenz, Dämpfung und Amplitude angeregt. Im besonderen Maße werden hier auch Resonanzfrequenzen der Erntemaschine-Vorsatz-Einheit angeregt, so dass starke Eigenschwingungen entstehen können. Diese Schwingungen stehen dem Ziel einer konstanten Schnitthöhe des Ernteguts entgegen und verschlechtern das Ergebnis der Vorsatzhöhenregelung. Die erwähnten Schwingungen führen dazu, dass sich das Arbeitsfahrzeug 10 mit dem Erntevorsatz 16 nach vorn und hinten neigt, d.h. Nickschwingungen durchführt.

Derartige Nickschwingungen entstehen auch, wenn die Vortriebsgeschwindigkeit des Arbeitsfahrzeugs 10 durch manuelles Verstellen des Fahrhebels 44 durch den Bediener oder eine Automatik, die bestrebt ist, den Durchsatz durch die Arbeitsmaschine 10 konstant zu halten, verändert wird, oder wenn das Arbeitsfahrzeug 10 Bodenunebenheiten überfährt. Bei Arbeitsfahrzeugen mit (hydraulisch oder mechanisch) gefederten Rädern oder Raupenlaufwerken können ähnliche Nickschwingungen entstehen, auch wenn die unmittelbar im Bodeneingriff stehenden Mittel, d.h. insbesondere Raupenlaufwerke, nur wenig oder überhaupt nicht gefedert sind.

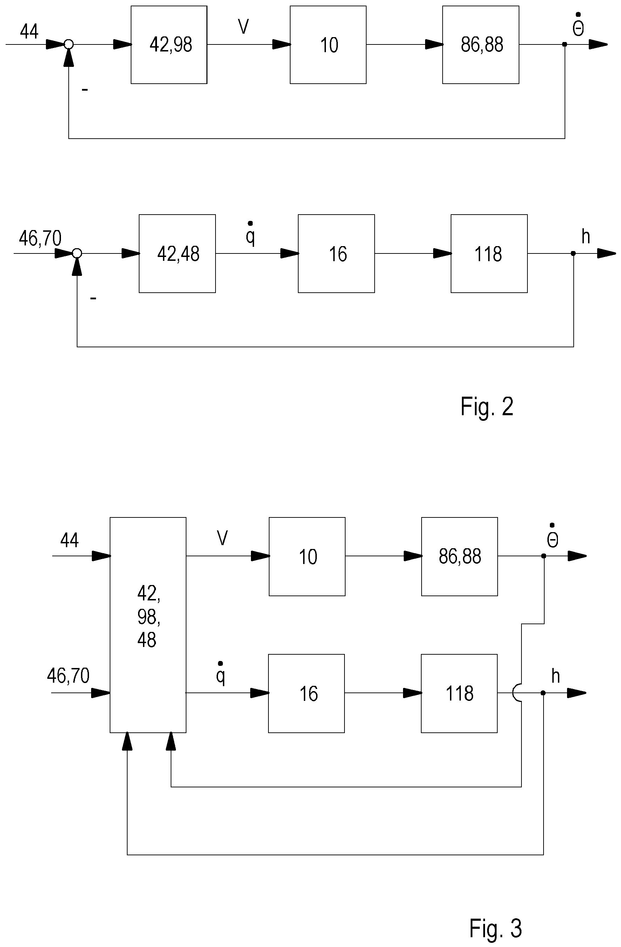

Die Figur 2 zeigt eine erste Ausführungsform einer Anordnung zur Dämpfung einer derartigen, eventuellen Nickschwingung. Im oberen Teil der Figur 2 ist eine Regelschaltung dargestellt, bei der das Ausgangssignal des Fahrhebels 44 (oder einer im vorhergehenden Absatz erwähnten Automatik zur Geschwindigkeitsvorgabe) als Eingangssignal dient. Es wird, nach Abzug einer weiter unten beschriebenen Regelgröße, einer Steuereinrichtung 42 zugeführt, die wiederum das Übersetzungsverhältnis eines hydrostatischen Antriebs 98 kontrolliert, der die vorderen Räder 14 antreibt und als Aktor zur Beeinflussung der Vortriebsgeschwindigkeit des Arbeitsfahrzeugs 10 dient. Das System aus Arbeitsmaschine 10 und Erntevorsatz 16 fährt somit mit einer bestimmten Geschwindigkeit, die möglicherweise beschleunigt oder verzögert wird. Die Geschwindigkeitsänderungen führen zu den beschriebenen Nickschwingungen. Die Steuereinrichtung 42 ist mit einem Sensor 86 verbunden, bei dem es sich um einen Vibrations-, Beschleunigungs- oder Trägheitssensor handelt und der am Schrägförderer 18 angebracht ist. Außerdem ist die Steuereinrichtung 42 mit einem Drucksensor 88 verbunden, der den Druck in der Kolbenkammer des Aktors 48 erfasst. Anhand der Signale des Sensors 86 und des Drucksensors 88 evaluiert die Steuereinrichtung 42 die Änderungsrate δΘ/δt des Neigungswinkels des Arbeitsfahrzeugs 10 und/oder des Erntevorsatzes 16 in Vorwärtsrichtung. Diese Änderungsrate wird als Regelgröße von der Eingangsgröße des Regelkreises abgezogen. Somit wird die Vortriebsgeschwindigkeit des Arbeitsfahrzeugs durch die Steuereinrichtung 42 im Sinne einer Dämpfung einer Nickschwingung kontrolliert. Der Sensor 86 und der Drucksensor 88 dienen hier als Mittel zur Erkennung einer vorhandenen Nickschwingung.

Außerdem umfasst die Steuereinrichtung 42 nach Figur 2 einen weiteren, unten eingezeichneten Regelkreis, dem als Eingangsgröße die gewünschte Schnitthöhe zugeführt wird, die mittels der Bedienerschnittstelle 46 oder die Sensorik 70 vorgegeben wird. Das Eingangssignal wird, nach Abzug einer Regelgröße, der Steuereinrichtung 42 zugeführt, die (über nicht eingezeichnete Ventile und Pumpen) eine Flussrate δq/δt hydraulischen Fluids für den Aktor 48 kontrolliert. Die sich ergebende Höhe des Erntevorsatzes 16 wird mittels des Höhensensors 118 erfasst und als Regelgröße von der Eingangsgröße des Regelkreises abgezogen. Beim unteren Teil der Figur 2 handelt es sich um einen konventionellen Regelkreis zur Höhenverstellung des Erntevorsatzes 16.

Wie in der Figur 3 gezeigt, können die beiden Regelkreise der Figur 2 auch in einem Mehrgrößenregler vereinigt werden. Dieser Mehrgrößenregler wird durch die Steuereinrichtung 42 realisiert, die als Eingangsgrößen die Sollgeschwindigkeit und die Sollhöhe des Erntevorsatzes 16 erhält und als Ausgangsgrößen über den hydrostatischen Antrieb 98 die Vortriebsgeschwindigkeit des Arbeitsfahrzeugs 10 sowie über den Aktor 48 die Höhe des Erntevorsatzes 16 kontrolliert. Die Änderungsrate δΘ/δt des Neigungswinkels des Arbeitsfahrzeugs 10 und/oder des Erntevorsatzes 16 in Vorwärtsrichtung wird mittels des Sensors 86 und/oder des Drucksensors 88 erfasst und an die Steuereinrichtung 42 zurückgeführt, wie auch die mit dem Höhensensor 118 erfasste tatsächliche Höhe des Erntevorsatzes 16 über dem Boden.

Bei der Ausführungsform nach Figur 3 besteht die Möglichkeit, dass zu erwartende Nickschwingungen, die durch eine Höhenverstellung des Erntevorsatzes 16 bedingt sind, vorausschauend in die Geschwindigkeitssteuerung übernommen werden, um sie zu bedämpfen oder zu vernichten. So ist beim Anheben des Erntevorsatzes 16 damit zu rechnen, dass das Arbeitsfahrzeug 10 sich nach vorn neigen wird, was durch eine Beschleunigung ausgeglichen werden kann. Analog ist beim Absenken des Erntevorsatzes 16 damit zu rechnen, dass sich das Arbeitsfahrzeug 10 nach hinten neigt, was durch eine Verzögerung ausgeglichen werden kann. Das Höhenvorgabesignal für den Erntevorsatz 16 am Eingang der Steuerung 42 dient dann als Mittel zur Erkennung einer zu erwartenden Nickschwingung des Arbeitsfahrzeugs 10.

Analog können die Auswirkungen zu erwartender Geschwindigkeitsänderungen auf die Höhensteuerung berücksichtigt werden: wird das Arbeitsfahrzeug 10 beschleunigt, wird der Erntevorsatz 16 sich nach oben bewegen, was durch Absenken des Erntevorsatzes 16 durch die Steuerung 42 und den Aktor 48 ausgeglichen werden kann. Wird das Arbeitsfahrzeug 10 verzögert, wird sich der Erntevorsatz 16 absenken, was durch Anheben durch die Steuerung 42 und den Aktor 48 ausgeglichen werden kann.

Im Rahmen des der Erfindung zu Grunde liegenden Gedankens sind weitere Verfeinerungen möglich. So kann das Signal an den Aktor 48 zur Höhensteuerung des Erntevorsatzes gemäß der Offenbarung der DE 10 2014 203 005 B3, mit einem zeitverzögerten, phasenverschobenen Signal überlagert werden, um die beim Verstellen des Erntevorsatzes entstehenden Schwingungen zu dämpfen. Die dort offenbarte Vorgehensweise ist auch bei der Kontrolle der Vortriebsgeschwindigkeit möglich, d.h. nach einer Beschleunigung erfolgt eine weitere Beschleunigung (wenn sich die Erntemaschine nach gewisser Zeit nach vorn neigt) und/oder eine Verzögerung (wenn sich die Erntemaschine nach hinten neigt), um die Nickschwingung möglichst schnell zu dämpfen. Das Geschwindigkeitsvorgabesignal am Eingang der Steuerung 42 dient dann als Mittel zur Erkennung einer zu erwartenden Nickschwingung des Arbeitsfahrzeugs 10. Die Steuereinrichtung 42 würde dann einen Signalformer (nicht gezeigt) umfassen, der betreibbar ist, ein empfangenes Geschwindigkeitsvorgabesignal an den Aktor weiter zu leiten und zeitverzögert ein zweites Geschwindigkeitsvorgabesignal an den Aktor zu geben, wie im erwähnten Patentdokument und dort erwähnten Stand der Technik im Detail beschrieben.

Bei einer derartigen Höhensteuerung des Erntevorsatzes 16 und/oder der Geschwindigkeitssteuerung können die zu überlagernden Stellsignale an die Resonanzfrequenzen und Dämpfungsfaktoren der Erntemaschine-Vorsatz-Einheit und damit auch an verschiedenste Vorsatz-Erntemaschine-Kombinationen sowie variierende Reifen- und Bodenparameter adaptiert werden. Die hierzu nötigen Messungen werden im Falle eines als Aktor arbeitenden Hydraulikzylinders 48 von dem Drucksensor 88 geliefert. Weiterhin können Dämpfungsfaktoren und Resonanzfrequenzen auch durch den Sensor 86 bestimmt werden.

Bei der Höhensteuerung des Erntevorsatzes 16 und bei der schwingungstilgenden Geschwindigkeitssteuerung kann auch das Bodenprofil vor der Erntemaschine und dessen Zusammenwirken mit den Reifen berücksichtigt werden, wie in der DE 10 2014 208 070 A1 beschrieben wird, deren Offenbarung ebenfalls durch Verweis mit in die vorliegenden Unterlagen aufgenommen wird.

Die Steuerung 42 der Figur 3 erhält nach alledem zwei Eingangsgrößen (Sollgeschwindigkeit des Arbeitsfahrzeugs 10 und Sollhöhe des Erntevorsatzes 16) und zwei Stellgrößen (Antrieb 98 und Aktor 48), wobei beide Eingangsgrößen beide Stellgrößen beeinflussen, deren Wirkungen sich zudem direkt oder indirekt untereinander beeinflussen. In der Steuerung 42 können vorteilhafterweise Optimierungsverfahren, die z.B. die benötigte Antriebsenergie für den Vortrieb der Arbeitsmaschine 10 und die zum Verstellen der Aktoren 48, 98 erforderliche Stellenergie minimieren, zur Anwendung kommen, um durch möglichst geringen Energieeinsatz ein gutes Dämpfungsergebnis und eine möglichst gute Einhaltung der Schnitthöhe zu erhalten. Darüber hinaus kann durch den Einsatz passiver und semi-aktiver Hydraulikkomponenten, wie z.B. (pneumatischer) Hydrospeicher (vgl. beispielsweise DE 10 2013 213 588 A1) oder Komponenten mit magnetorheologischen Fluiden der nötige Energieeinsatz weiter verringert werden.

Bei einer anderen Ausführungsform ist das verstellbare Element ein an einem Front- oder Heckkraftheber eines Traktors angebrachtes Arbeitsgerät oder ein höhenverstellbares und/oder um eine sich in Vorwärtsrichtung erstreckende Achse schwenkbares Spritzgestänge einer selbstfahrenden Feldspritze oder ein um eine vertikale und/oder horizontale Achse verstellbarer Auswurfkrümmer eines Feldhäckslers.

## Patentansprüche

1. Arbeitsfahrzeug (10), das durch federnde Elemente auf dem Boden abgestützt und mit einer Anordnung zur Dämpfung einer eventuellen Nickschwingung des Arbeitsfahrzeugs (10) ausgestattet ist, bei welcher sich das Arbeitsfahrzeug (10) nach vorn oder hinten neigt, wobei die Anordnung mit einer Geschwindigkeitssteuerung des Arbeitsfahrzeugs (10) und /oder einer Bodenprofilbestimmungseinrichtung und/oder einer Kontrolleinrichtung zur Verstellung eines Elements gegenüber dem Arbeitsfahrzeug (10) verbundene Mittel zur Erkennung einer zu erwartenden Nickschwingung des Arbeitsfahrzeugs (10) und/oder Mittel zur Erkennung einer vorhandenen Nickschwingung des Arbeitsfahrzeugs (10) und eine Steuereinrichtung (42) umfasst, die mit den Mitteln und einem Aktor zur Beeinflussung der Vortriebsgeschwindigkeit des Arbeitsfahrzeugs (10) verbunden und betreibbar ist, den Aktor im Sinne einer Dämpfung der Nickschwingung automatisch anzusteuern, indem sie das Arbeitsfahrzeug (10) leicht beschleunigt, wenn es sich gerade nach vorn neigt, um schließlich eine genau horizontale Ausrichtung des Arbeitsfahrzeugs (10) zu erzielen und die Energie der Nickschwingung zu vermindern oder zu vernichten und analog das Arbeitsfahrzeug (10) leicht abbremst, wenn es sich nach hinten neigt.

2. Arbeitsfahrzeug (10) nach Anspruch 1, wobei die Mittel zur Erkennung einer vorhandenen Nickschwingung einen Trägheitssensor (86) und/oder einen Drucksensor (88) umfassen, der den Druck in einem zur Verstellung eines beweglich am Arbeitsfahrzeug (10) angebrachten Elements dienenden, fluidischen Aktor (48) erfasst.

3. Arbeitsfahrzeug (10) nach Anspruch 1, wobei die Steuereinrichtung (42) einen Signalformer umfasst, der betreibbar ist, ein empfangenes Geschwindigkeitsvorgabesignal an den Aktor weiter zu leiten und zeitverzögert ein zweites Geschwindigkeitsvorgabesignal an den Aktor zu geben.

4. Arbeitsfahrzeug (10) nach einem der vorhergehenden Ansprüche, wobei die Steuereinrichtung (42) zusätzlich mit einem zweiten Aktor (48) zur Verstellung eines Elements gegenüber dem Arbeitsfahrzeug (10) verbunden und betreibbar ist, den zweiten Aktor (48) im Sinne einer Einhaltung einer Sollposition des Elements und/oder einer Dämpfung der Nickschwingung anzusteuern.

5. Arbeitsfahrzeug (10) nach Anspruch 4, wobei die Steuereinrichtung (42) den zur Beeinflussung der Vortriebsgeschwindigkeit dienenden, ersten Aktor und den zweiten Aktor (48) in getrennten Regelkreisen oder in einem Mehrgrößenregler ansteuert.

6. Arbeitsfahrzeug (10) nach einem der vorhergehenden Ansprüche, das als landwirtschaftliches Arbeitsfahrzeug (10) ausgeführt ist.

## Claims

1. Work vehicle (10) which is supported on the ground by sprung elements and is equipped with an arrangement for attenuating a possible pitching oscillation of the work vehicle (10), during which pitching oscillation of the work vehicle (10) the work vehicle (10) inclines forwards or rearwards, wherein the arrangement comprises means for detecting an expected pitching oscillation of the work vehicle (10) and/or means for detecting a present pitching oscillation of the work vehicle (10), said means being connected to a speed controller of the work vehicle (10) and/or to a ground profile-determining device and/or to a control apparatus for adjusting an element with respect to the work vehicle (10), and a control device (42) which is connected to the means and to an actuating for influencing the advancing speed of the work vehicle (10) and which can be operated to actuate automatically the actuator with the effect of attenuating the pitching oscillation in that it slightly accelerates the work vehicle (10) when it is just inclined forwards, in order ultimately to bring about a precisely horizontal orientation of the work vehicle (10) and to reduce or destroy the energy of the pitching oscillation and analogously slightly brakes the work vehicle (10) if it inclines rearwards.

2. Work vehicle (10) according to Claim 1, wherein the means for detecting a present pitching oscillation comprise an inertia sensor (86) and/or a pressure sensor (88) which senses the pressure in a fluidic actuator (48) which serves to adjust an element which is movably mounted on the work vehicle (10).

3. Work vehicle (10) according to Claim 1, wherein the control device (42) comprises a signal shape which can be operated to pass a received speed specification signal to the actuator and to feed, with a delay, a second speed specification signal to the actuator.

4. Work vehicle (10) according to one of the preceding claims, wherein the control device (42) is additionally connected to a second actuator (48) for adjusting an element with respect to the work vehicle (10) and can be operated to actuate the second actuator (48) with the effect of maintaining a setpoint position of the element and/or attenuation of the pitching oscillation.

5. Work vehicle (10) according to Claim 4, wherein the control device (42) actuates the first actuator which serves to influence the advancing speed and the second actuator (48) in separate control circuits or in a multi-variable regulator.

6. Work vehicle (10) according to one of the preceding claims, which is embodied as an agricultural work vehicle (10).

## Revendications

1. Véhicule de travail (10) supporté par des éléments à ressort sur le sol et doté d'un ensemble destiné à amortir toute vibration de tangage du véhicule de travail (10) lors de laquelle le véhicule de travail (10) bascule vers l'avant ou vers l'arrière, l'ensemble comprenant des moyens de détection d'une vibration de tangage attendue du véhicule de travail (10) et/ou des moyens de détection d'une vibration de tangage présente du véhicule de travail (10) et un dispositif de commande, lesquels moyens sont reliés à une commande de vitesse du véhicule de travail (10) et/ou à un dispositif de détermination de profil de sol et/ou à un dispositif de commande du déplacement d'un élément par rapport au véhicule de travail (10), lequel dispositif de commande (42) est relié aux moyens et à un actionneur destiné à influer sur la vitesse de propulsion du véhicule de travail (10) et peut être utilisé pour commander automatiquement l'actionneur dans le sens d'amortissement de la vibration de tangage en ce qu'il accélère légèrement le véhicule de travail (10) lorsque celui-ci bascule vers l'avant pour obtenir à la fin un alignement parfaitement horizontal du véhicule de travail (10) et pour réduire ou annihiler l'énergie de vibration de tangage et, de manière analogue, pour décélérer légèrement le véhicule de travail (10) lorsque celui-ci bascule vers l'arrière.

2. Véhicule de travail (10) selon la revendication 1, les moyens de détection d'une vibration de tangage présente comprenant un capteur inertiel (86) et/ou un capteur de pression (88) qui détecte la pression dans un actionneur fluidique (48) servant à déplacer un élément monté de manière mobile sur le véhicule de travail (10).

3. Véhicule de travail (10) selon la revendication 1, le dispositif de commande (42) comprenant un moyen de mise en forme de signal pouvant être utilisé pour transmettre un signal de consigne de vitesse reçu à l'actionneur et pour délivrer un deuxième signal de prescription de vitesse à l'actionneur de manière temporisée.

4. Véhicule de travail (10) selon l'une des revendications précédentes, le dispositif de commande (42) étant en outre relié à un deuxième actionneur (48) destiné à déplacer un élément par rapport au véhicule de travail (10) et pouvant être utilisé pour commander le deuxième actionneur (48) dans le sens d'un maintien d'une position de consigne de l'élément et/ou d'un amortissement de la vibration de tangage.

5. Véhicule de travail (10) selon la revendication 4, le dispositif de commande (42) commandant le premier actionneur, servant à influer sur la vitesse de propulsion, et le deuxième actionneur (48) dans des circuits de régulation séparés ou dans un régulateur à variables multiples.

6. Véhicule de travail (10) selon l'une des revendications précédentes, qui est conçu comme un véhicule de travail agricole (10).
